# DEMANDE DE BREVET EUROPEEN

(11) **EP 0 540 094 A1**
(43) Date de publication de la demande: **05.05.1993**
(21) Numéro de dépôt: 92203250.3
(22) Date de dépôt: 22.10.1992
(51) Int. Cl.: G06K 11/18

(54) **Dispositif de commandes multidirectionnelles**

(30) Priorité: 30.10.1991 FR 9113410; 18.12.1991 FR 9115723
(71) Demandeur: LABORATOIRES D'ELECTRONIQUE PHILIPS S.A.S., 94450 Limeil-Brévannes (FR); Philips Electronics N.V., 5621 BA Eindhoven (NL)
(72) Inventeur: Polaert, Rémy, Société Civile S.P.I.D., F-75008 Paris (FR); Damour, Jean-Pierre, Société Civile S.P.I.D., F-75008 Paris (FR); Maniguet, François, Société Civile S.P.I.D., F-75008 Paris (FR)
(74) Mandataire: Landousy, Christian

(57) **Abrégé**

Dispositif (5) de commandes multidirectionnelles comprenant au moins une lame (10) munie de jauges de contrainte (R1-R4) (R5-R8) qui détectent des déformations multidirectionnelles subies par la lame (10) sous l'action d'une force F exercée sur une face de la lame. Une (11) des extrémités de la lame coopérant avec un support (12), la lame (10) repose par l'autre face de l'autre extrémité (14) sur un pivot (15). Le pivot (15) peut être formé par la tête d'un micro-contacteur (19), l'extrémité (11) de la lame (10) étant articulée (13a, 9) (41) par rapport au support (12). Le micro-contacteur peut contrôler des opérations de réveil du dispositif et/ou de validation des signaux électriques provenant des jauges de contrainte. L'orientation de la force F par rapport à l'axe du pivot (15) permet de disposer de commandes multidirectionnelles. Le dispositif présente une forme ergonomiquement adaptée à un maniement à l'aide d'une seule main.

## Description

L'invention concerne un dispositif de commandes multidirectionnelles comprenant au moins un élément oblong ayant une première et une seconde extrémité, l'élément étant muni de jauges de contrainte qui détectent des déformations multidirectionnelles subies par l'élément sous l'action d'une force exercée près de la seconde extrémité, la première extrémité coopérant avec un support.

Un tel dispositif est connu par exemple du document GB-A-2 211 280 qui décrit un dispositif de type manche à balai (joystick en langue anglaise) formé d'un barreau dont la section a été réduite par endroits afin de rendre le barreau déformable dans plusieurs directions. Ces endroits sont aménagés pour recevoir des jauges de contraintes qui détectent les déformations. Le barreau forme le coeur d'une manette qui peut être actionnée par une main. Le barreau peut se déplacer dans un volume conique autour d'une de ses extrémités, l'extrémité mobile se déplaçant dans toutes les directions perpendiculaires au barreau. Ce dispositif de commandes est bien évidemment volumineux et d'un coût élevé de fabrication.

D'autre part, lorsque le manche à balai a subi le déplacement désiré par l'utilisateur, il faut valider les signaux électriques provenant des jauges de contrainte. La mise en oeuvre de cette fonction n'est pas prise en compte par ce document.

Un but principal de l'invention est de proposer un dispositif de commandes multidirectionnelles qui soit beaucoup moins volumineux et d'une fabrication beaucoup plus simple. Les applications visées étant dans le domaine de la grande diffusion, une fabrication simplifiée doit déboucher sur un coût peu élevé.

Le but principal est atteint à l'aide d'un dispositif qui est caractérisé en ce que l'élément oblong est formé d'une lame, la seconde extrémité de la lame appuyant, par une face de la lame, sur un pivot solidaire du support.

Le pivot constitue un point d'appui. Selon l'orientation que présente, sur ce point d'appui, la résultante de la force appliquée, la déformation présentée par la lame sera de type différent (flexion, torsion). Des ponts de jauges de contrainte disposés pour détecter sélectivement certains types de déformation, déterminent l'orientation et l'intensité de la force appliquée.

En exerçant la force à l'aide d'un poussoir disposé sur la seconde extrémité en vis-à-vis du pivot, on obtient une commande multidirectionnelle qui peut être actionnée à l'aide d'un doigt. En inclinant et en appuyant plus ou moins fort sur le poussoir, on contrôle ainsi l'orientation et l'intensité de ladite commande. Lorsque la force ne s'exerce pas en vis-à-vis du pivot, les directions concernées se situent sur une étendue limitée.

Un but secondaire de l'invention est qu'une validation desdits signaux électriques provenant des jauges de contrainte doit pouvoir être opérée et perçue aisément par l'utilisateur avec un faible coût en matériel.

Le but secondaire est atteint à l'aide d'un dispositif dans lequel le pivot comprend un micro-contacteur, le poussoir servant à activer au moins un moyen de contact dudit micro-contacteur, la première extrémité de la lame coopérant en rotation avec le support à l'aide d'un moyen d'articulation.

Ainsi en exerçant une force sur la lame, l'utilisateur, dans un seul geste, va non seulement disposer d'une commande électrique mais également d'un moyen de perception de l'action grâce au "clic" mécanique constitué par le micro-contacteur.

Le micro-contacteur peut possèder un seul moyen de contact dont l'activation provoque une validation des signaux électriques en provenance des jauges de contrainte.

Le micro-contacteur peut également posséder deux moyens de contact, un premier moyen de contact activé par une force appliquée F1 faible et un second moyen de contact activé par une force appliquée F2 plus élevée F2 > F1, le premier moyen de contact commandant un réveil du dispositif et le second moyen de contact commandant la validation desdits signaux électriques.

Dans une autre variante, il est possible que le dispositif possède un micro-contacteur avec un moyen de contact et en outre un autre micro-contacteur placé sur la seconde face de la lame coaxialement avec ledit micro-contacteur, l'un des deux micro-contacteurs étant activé par une force appliquée F1 faible afin de commander un réveil dudit dispositif et l'autre des deux micro-contacteurs étant activé par une force appliquée F2 plus élevée F2 > F1, afin de commander la validation desdits signaux électriques.

Pour opérer, la tête du micro-contacteur doit subir un déplacement par rapport au support, par exemple s'enfoncer dans le corps du micro-contacteur, tout en conservant une partie émergeante pour remplir la fonction de pivot. Ce déplacement doit être accompagné par un déplacement de la première extrémité de la lame grâce à une légère rotation obtenue par un moyen d'articulation placé entre le support et la lame.

Ce moyen d'articulation peut être formé par un axe monté sur des coussinets. Il peut également être formé d'une pièce élastique déformable par exemple un ressort à lame ou une lame en matière plastique.

Le déplacement de la tête du micro-contacteur a par définition une fin de course. Dans cette situation, il est souhaitable que des forces appliquées excessives ne soient pas supportées par le micro-contacteur qui pourrait alors être détruit. Pour cela le dispositif peut être muni de moyens pour limiter la force exercée sur le micro-contacteur. Néanmoins pour opérer correctement le micro-contacteur doit continuer à subir une force appropriée à son fonctionnement correct.

En exerçant la force dans l'axe de la tête du micro-contacteur, on sollicite le moyen de contact et le déclic mécanique du micro-contacteur.

En exerçant la force légèrement hors d'axe de la tête du micro-contacteur, il est possible de disposer de commandes directionnelles dans toutes les directions parallèles à la lame, autour du micro-contacteur.

Il est possible que la lame soit formée par une découpe partielle d'une plaque, telle que la première extrémité de la lame reste solidaire de la plaque et que la seconde extrémité de la lame soit mobile.

Un tel dispositif peut être utilisé soit d'une manière autonome mobile ou fixe (télécommande), soit connecté à un appareil à commander.

Pour protéger la lame et les jauges de contrainte des agents extérieurs, il est possible de les placer dans un boîtier muni de parties déformables servant à relier le poussoir à une partie du boîtier. Le boîtier peut faire office de support. Il peut être en matière plastique moulée. La première extrémité de la lame est alors assujettie à d'autres parties du boîtier. En particulier, il est possible que le moyen d'articulation soit constitué d'une pièce élastique, par exemple une lame, moulée avec le boîtier.

Dans le cas où le dispositif opère de manière autonome, on place également dans le boîtier les moyens électriques transformant les signaux électriques issus des jauges de contrainte en signaux aptes à être transmis par voie aérienne.

Un dispositif autonome mobile peut être une télécommande avec liaison infra-rouge. Un dispositif autonome fixe peut être par exemple, un boîtier mural, commandant des actuateurs par exemple par infra-rouge.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : une vue schématique en coupe des organes essentiels d'un dispositif selon l'invention en position d'équilibre de la lame.
Figures 2 et 3 : deux vues schématiques en coupe du dispositif montrant les déformations de la lame pour des inclinaisons Nord et Sud.
Figures 4A et 4B : deux vues schématiques en coupe du dispositif pour des inclinaisons Ouest et Est.
Figure 5 : une représentation d'une lame partiellement découpée dans une plaque.
Figure 6 : une vue en coupe (A) et une vue de dessus (B) d'un dispositif selon l'invention avec une articulation par axe et coussinets.
Figure 7 : une vue en coupe d'un dispositif selon l'invention avec une articulation formée par un ressort à lame.
Figure 8 : une vue en coupe du dispositif selon l'invention dans deux états (A) (B) de flexion.
Figure 9 : une vue en coupe partielle du dispositif selon l'invention dans un état de torsion.
Figure 10 : deux schémas A et B d'un micro-contacteur avec respectivement un et deux moyens de contact.
Figure 11 : un schéma d'un micro-contacteur avec un moyen de contact connecté à un circuit d'identification.
Figure 12 : une vue partielle en coupe d'un dispositif muni de deux micro-contacteurs coaxiaux.
Figure 13 : un schéma de la disposition de deux ponts à jauges de contrainte sur la lame opérant des mesures de flexion et de torsion.
Figure 14 : un schéma électrique d'un circuit de commande à liaison par fil.
Figure 15 : un schéma de principe d'une télécommande à liaison sans fil.
Figure 16 : une vue en coupe d'un moyen pour limiter la force exercée sur le micro-contacteur.
Figure 17 : une vue en coupe d'un dispositif comprenant un boîtier ayant des parties déformables.
Figure 18 : une vue générale d'une télécommande tenue en main.

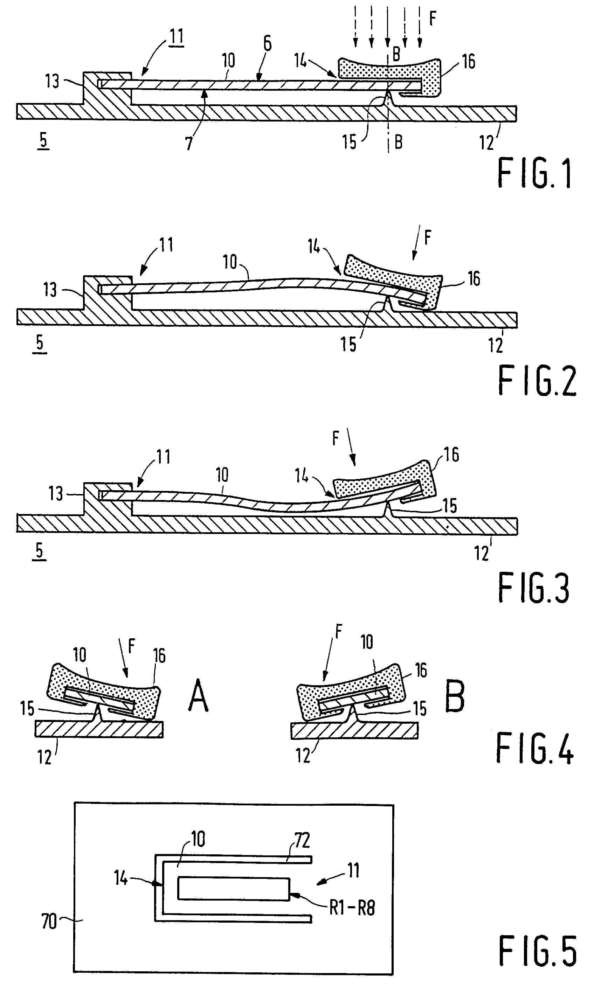

Les figures 1, 2, 3, 4A et 4B concernent un mode de réalisation dans lequel il existe un pivot fixe par rapport à un support. Les figures 5A, 5B, 6, 7A, 7B, 8, 9A, 9B, 10, 11, 15 concernent un mode de réalisation dans lequel le pivot est mobile par rapport au support.

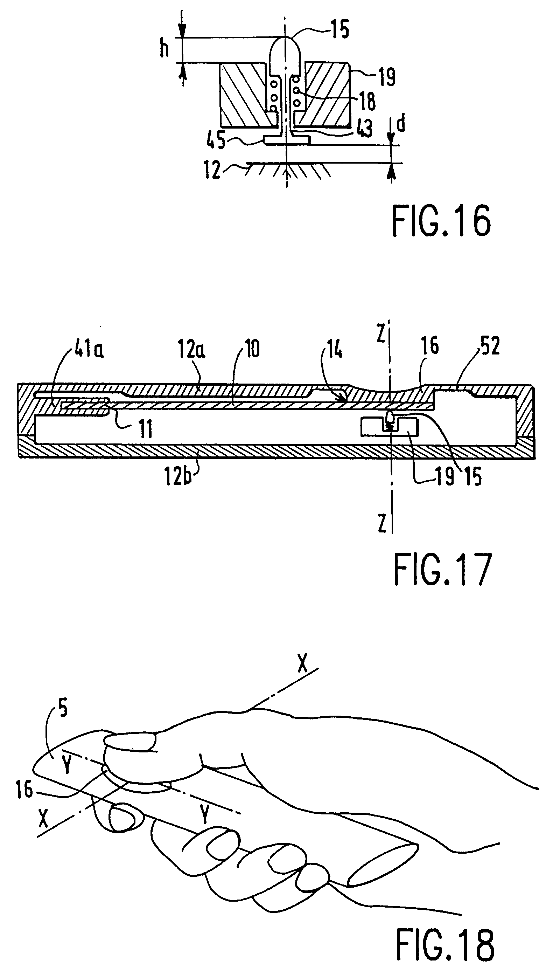

La figure 1 représente une vue schématique d'une coupe longitudinale AA des organes essentiels du dispositif 5 (figure 18). Les dimensions ne sont pas à l'échelle. Une extrémité 11 de la lame 10 est maintenue par encastrement rigide ou souple dans une butée 13 d'un support 12. L'autre extrémité 14 de la lame 10 appuie par une face 7 sur un pivot 15. En réaction avec le pivot 15, une force F peut être appliquée sur la face 6 de la lame soit entre la butée 13 et le pivot 15 soit au-delà du pivot 15. Lorsque le dispositif est destiné à être commandé par la pression d'un doigt, par exemple un pouce, on dispose un poussoir 16 sur l'extrémité 14 de la lame en appui sur le pivot 15. Un poussoir à forme concave est bien adapté à l'action d'un doigt. Ainsi sans lever le doigt, on peut modifier l'orientation de la force en inclinant plus ou moins le doigt. Ces situations sont représentées sur les figures 2 et 3.

Dans le cas de la figure 2, la force F est appliquée au-delà du pivot 15. La déformation de la lame 10 se produit alors de telle sorte que la lame 10 s'écarte du support 10 entre la butée 13 et le pivot 15.

De manière analogue, la figure 3 représente la situation où la force F est appliquée entre la butée 13 et le pivot 15. La déformation de la lame 10 se produit alors de telle sorte que la lame 10 se rapproche du support 10 entre la butée 13 et le pivot 15. Dans les deux situations, la lame 10 subit une déformation en S c'est-à-dire qu'elle présente simultanément des zones en compression et des zones en extension.

Sur les figures 2 et 3, la déformation en S est représentée avec une forte exagération pour la bonne compréhension du fonctionnement. En fait la déformation est infime et le déplacement longitudinal de la lame sur le pivot 15 provoqué par la flexion reste microscopique. Par exemple, pour une lame céramique de 50 mm de longueur, la flèche maximale est de l'ordre de 0,1 à 0,5 mm, ce qui ne nécessite qu'un pivot ayant sensiblement cette même hauteur.

Pour désigner les commandes, on peut adopter une terminologie Nord et Sud pour les situations représentées respectivement sur les figures 2 et 3 par le fait que lorsque le dispositif est tenu en main les commandes des figures 2 et 3 s'opèrent respectivement vers le haut et vers le bas. Avec cette même terminologie, les figures 4A et 4B représentent respectivement des commandes Est et Ouest. Elles représentent une coupe BB passant par le pivot 15 (figure 18). L'extrémité 14 de la lame 10 peut ainsi être inclinée d'un côté ou de l'autre sous l'action de la force F. Comme l'autre extrémité 11 est encastrée dans la butée 13, il se produit une déformation en torsion de la lame 10.

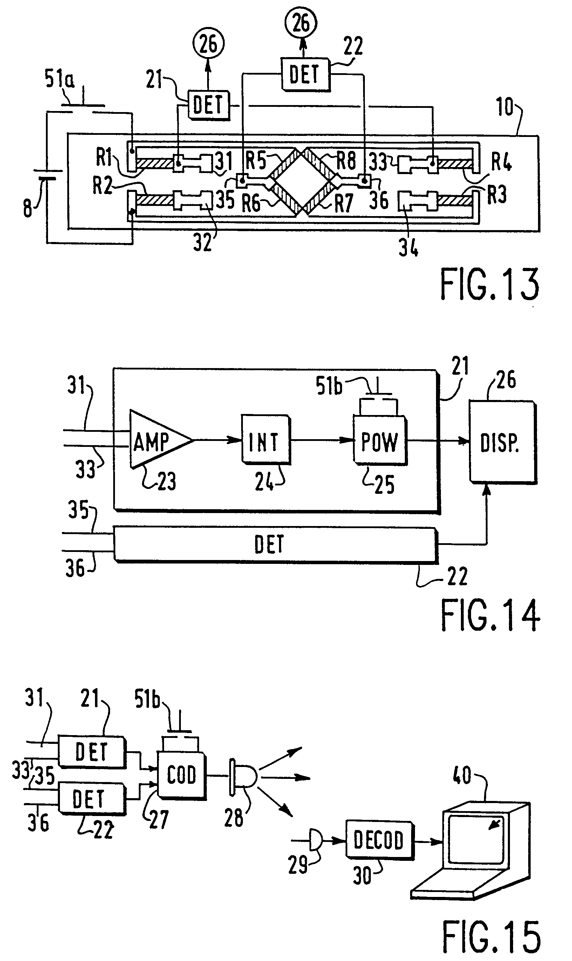

Pour mesurer les déformations subies par la lame 10, celle-ci est munie de jauges de contrainte. Elles sont disposées sur la lame 10 pour mesurer sélectivement certains types de déformation. Les déformations en flexion sont mesurées à l'aide d'un premier pont de jauges de contrainte et les déformations en torsion sont mesurées à l'aide d'un second pont de jauges de contrainte. La figure 13 représente un premier pont R₁, R₂, R₃, R₄ disposé longitudinalement sur la lame 10 et un second pont R₅, R₆, R₇, R₈ disposé à 45° de l'axe longitudinal de la lame 10. Pour éviter de surcharger la figure 13, toutes les liaisons électriques n'ont pas été représentées, en particulier la borne 31 doit être reliée à la borne 34 d'une part, et la borne 32 à la borne 33 d'autre part, pour obtenir le fonctionnement correct du premier pont R₁, R₂, R₃, R₄. En effet, les résistances R₁ et R₂ placées côte à côte, (respectivement R₃ et R₄) qui subissent la même déformation, ne doivent pas avoir de connexion commune pour que le pont opère correctement. Le premier pont est disposé en deux parties vers les extrémités de la lame dans des zones où apparaissent des contraintes maximales en extension et en compression. De même, le second pont est disposé vers le centre de la lame 10 dans une zone où les déformations de torsion sont maximales. La sensibilité de détection des déformations est ainsi optimale. Les deux ponts sont alimentés par une source 8 et deux circuits de détection DET 21, 22 détectent des tensions de déséquilibre de chaque pont.

Les circuits de détection 21 et 22 sont constitués par exemple d'amplificateurs avec filtres basse fréquence (intégrateur), et ils délivrent des signaux de commande aux dispositifs que l'on désire manoeuvrer.

La figure 14 est un exemple de schéma électrique d'un circuit de détection DET placé entre les bornes 31 et 33 du premier pont de jauges R₁, R₂, R₃, R₄. Le dispositif commandé 26 est par exemple un moniteur DISP. La flexion de la lame entraîne une différence de potentiel entre les bornes 31 et 33 qui est amplifiée par l'amplificateur 23, amortie ou intégrée en passant dans un filtre de basse fréquence par exemple un intégrateur INT 24, enfin un circuit électronique POW de puissance adaptée 25 délivre le signal convenable au dispositif commandé 26. Un second circuit de détection DET 22 analogue au circuit 21 opère de la même manière pour le second pont de jauges de contrainte. Pour disposer d'une commande par incrément, l'intégrateur 24 peut totaliser des valeurs d'incrément/décrément.

Les différents composants des circuits de détection sont montés sur une plaque par exemple une plaque de circuit imprimé. Il est possible de tirer profit de ce type de réalisation pour faire que la lame 10 soit formée par une partie partiellement découpée dans ladite plaque de circuit imprimé. La figure 5 représente une plaque 70 de circuit imprimé (verre epoxy ou autres) qui présente une découpe 72 en forme de U. Cette découpe dégage ainsi une languette qui constitue la lame 10 avec une extrémité 11 solidarisée à la plaque 70 et une extrémité 14 mobile. Le pivot 15 est alors disposé sous l'extrémité mobile 14. La découpe dans la plaque 70 du circuit imprimé permet à l'extrémité 11 de disposer d'une certaine souplesse. La lame 10 reçoit par gravure et/ou par dépôt, par exemple par sérigraphie, les ponts de jauges R1-R8 décrits sur la figure 13.

Le dispositif de commandes selon l'invention peut être une télécommande ou être incorporé à un clavier de touches de commandes. L'appareil manoeuvré de cette manière peut être :
- un dispositif électro-mécanique de positionnement délicat : tablette de microscope,
- un variateur de puissance électrique : éclairage, moteur, appareil électrique,
- un engin de levage puissant tel qu'une grue ou un pont roulant...
- un curseur sur une tablette, ou sur un écran d'un moniteur d'ordinateur ou de télévision. Dans ce dernier cas, il s'agit de sélectionner une fonction ou un objet dans un menu présenté sur l'écran. Le dispositif de commandes peut ainsi être incorporé à un clavier pour opérer le déplacement du curseur dans toutes les directions dans un domaine angulaire de 0° à 360°.

Qu'il s'agisse d'une grue ou d'un écran TV, la liaison entre le dispositif de commandes et l'appareil à actionner peut être effectuée soit par une liaison directe par fil ou câble soit par une liaison immatérielle par faisceau infrarouge ou ultrasonore comme cela est fait dans les systèmes de télécommande des appareillages TV ou audio.

La figure 15 est un exemple relatif à un dispositif de télécommande sans fil de liaison, par exemple à l'aide d'une liaison infrarouge. La différence de tension entre les bornes 31 et 33 (respectivement entre les bornes 35 et 36) est détectée par le circuit de détection 21 (respectivement par le circuit de détection 22). Les sorties des deux circuits de détection 21, 22 sont alors codées par un codeur 27 qui envoie des impulsions de tension ou de courant à la diode émettrice de lumière infrarouge 28. Ces impulsions de lumière sont captées par une diode photosensible 29, identifiées par un circuit décodeur 30 qui adresse à l'appareil commandé, par exemple un écran d'ordinateur muni d'un pointeur, des ordres de mouvement ou de positionnement correspondant à l'action mécanique du pouce sur le poussoir 16.

La figure 18 représente le dispositif 5 de commandes multidirectionnelles noyé dans un enrobage approprié qui laisse au poussoir 16 ses possibilités de manoeuvre par un doigt. La forme du dispositif 5 est ergonomiquement adaptée (par exemple allongée, forme pour placer les doigts) pour lui permettre d'être aisément manié à l'aide d'une seule main.

Comme dans les dispositifs de type manche à balai ou souris utilisés en combinaison avec les ordinateurs, ce dispositif de commande peut être équipé d'un ou plusieurs autres boutons poussoirs 51b (figure 14), faisant office de "click" qui servent soit à valider un déplacement d'un curseur, soit à mettre en oeuvre une commande. Les boutons poussoirs des circuits de détection 21, 22 peuvent être remplacés par un bouton poussoir commun 51b agissant sur un organe commun par exemple sur le codeur 27. Ces boutons poussoirs peuvent être commandés par la même main qui agit sur le poussoir 16. Etant donné le faible encombrement de la lame du dispositif, il est possible de doubler le dispositif en plaçant sur le côté du dispositif une seconde lame sensible et un second pivot de telle sorte qu'elle puisse répondre aux sollicitations d'un autre doigt : d'un index en particulier. De la sorte, on obtient un dispositif de commandes multi-fonctions ergonomiquement adapté à le main.

Selon un autre mode de réalisation, il est possible de faire que le pivot devienne mobile par rapport au support et que son enfoncement valide une commande électrique.

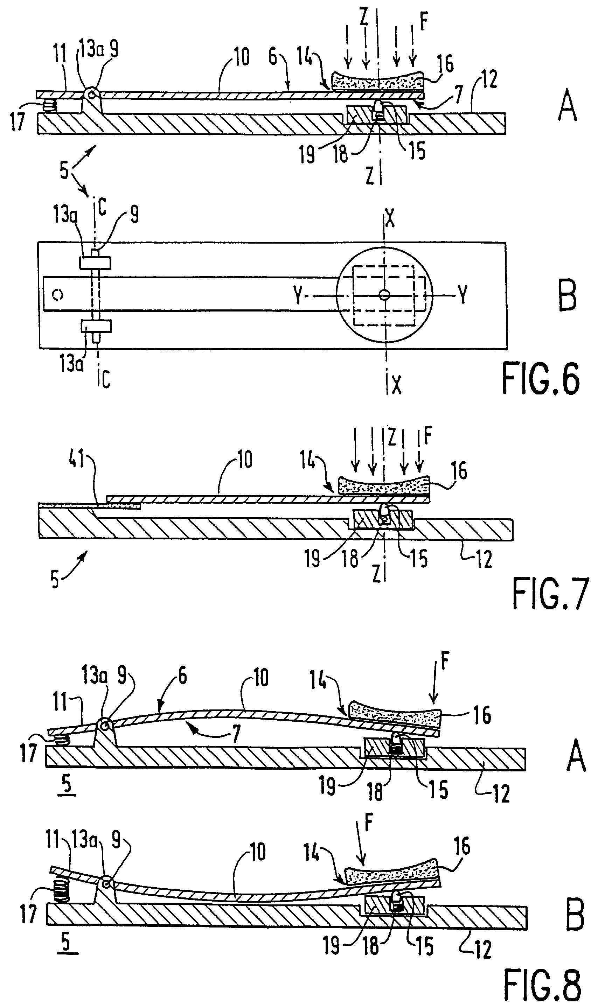

La figure 6 représente une vue en coupe (A) et une vue de dessus (B) d'un dispositif selon ce mode particulier de réalisation de l'invention. Les dimensions ne sont pas à l'échelle. Elle représente une lame 10 et un micro-contacteur 19 montés sur un support 12. La lame 10 présente une première extrémité 11, une seconde extrémité 14, une première face 7 et une seconde face 6. Le micro-contacteur 19 comprend une tête 15 qui actionne au moins un moyen de contact. La tête 15, qui est montée sur un ressort 18, a une forme arrondie ou légèrement pointue pour constituer un pivot. Par l'extrémité 14, la lame 10 est en appui sur la tête 15 par la seconde face 7. L'autre extrémité 11 de la lame est solidarisée au support 12 par un moyen d'articulation. Sur la figure 6, ce moyen d'articulation est formé d'un axe 9, solidaire de la lame (par exemple collé) et de deux coussinets 13a solidaires du support 12. La lame peut ainsi tourner autour de l'axe 9. On peut placer un ressort 17 sous l'extrémité 11 pour maintenir l'extrémité 14 en appui sur la tête 15 et éviter tout jeu. La force F est exercée sur la tête 15, dans la direction de l'axe ZZ, à l'aide d'un poussoir 16 placé vers l'extrémité 14 de la lame sur la seconde face 6.

La figure 7 représente une vue en coupe d'un dispositif analogue avec le moyen d'articulation constitué par un ressort à lame 41 fixé à la lame 10 et au support 12. Il remplit la même fonction que l'axe 9 et les coussinets 13a. L'élasticité du ressort à lame 41 permet d'une part de mettre en appui sur la tête 15 l'extrémité 14 de la lame et d'autre part permet à la lame 10 d'être légèrement mue en rotation par rapport au support 12.

Lorsque la force exercée par le doigt agit parfaitement dans l'axe ZZ de la tête 15 du micro-contacteur, celle-ci s'enfonce légèrement dans le micro-contacteur 19 en s'opposant au ressort 18. Le micro-contacteur fournit ainsi deux actions :
- d'une part, il provoque l'ouverture (ou la fermeture) d'un circuit électrique,
- et d'autre part, il fournit un "clic" mécanique, ce qui donne à l'utilisateur une sensation tactile. Cette action physiologique transmet à l'utilisateur l'information que la commande a bien été délivrée.

Lorsque la force exercée par le doigt est déportée ou inclinée par rapport a l'axe ZZ, le dispositif permet de déterminer l'écart d'orientation de la force sur la lame, ce qui constitue une commande multidirectionnelle. Pour que la tête 15 conserve son rôle de pivot, il est nécessaire que la tête 15 dépasse suffisamment du bord supérieur du micro-contacteur 19 lorsqu'elle est enfoncée.

La figure 8 représente une vue en coupe d'un dispositif avec la lame 10 sollicitée en flexion. Les déplacements sont volontairement exagérés. Lorsqu'un doigt, par exemple un pouce, exerce une force F sur le poussoir 16, cette force peut être appliquée soit entre la tête 15 et l'axe 9 (figure 8 - B) soit au-delà de la tête 15 (figure 8 - A). Dans les deux cas, la lame subit une cambrure ayant une allure d'arc de cercle. Les jauges de contrainte qui sont situées par exemple sur la face 6 de la lame passent ainsi d'une sollicitation en compression à une sollicitation en élongation.

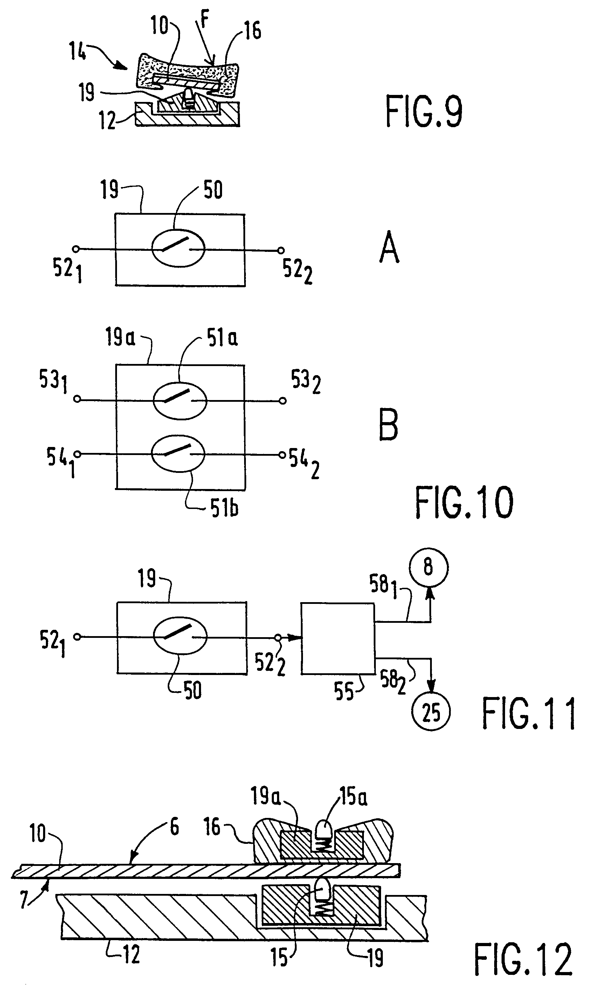

La figure 9 représente une coupe perpendiculaire à celle de la figure 8 passant par l'axe ZZ. Sous l'action de la force F l'extrémité 14 peut alors être inclinée d'un côté ou de l'autre ce qui fait que la lame est alors sollicitée en torsion.

Ainsi les jauges de contrainte placées sur la lame 10 détectent les déformations en flexion et en torsion de la lame. En les couplant avec des moyens électriques pour le traitement et l'émission de signaux appropriés, on dispose alors de commandes multidirectionnelles.

La détection d'une déformation significative dépend des flexibilités relatives de la lame 10, du ressort 18, de la configuration des moyens de contact du micro-contacteur et éventuellement du ressort 17.

Si le moyen de contact est activé par un toucher très léger (force F1) -un simple effleurement- le micro-contacteur peut alors être utilisé pour réveiller les moyens électriques de traitement et d'émission de signaux appropriés.

Si le moyen de contact est activé par une force appliquée F2 plus importante, le micro-contacteur peut alors être utilisé pour valider une commande. Il est possible de combiner une action de réveil et une action de validation.

Pour illustrer ces possiblités, la figure 10 représente deux types 19, 19a de micro-contacteurs disposant :
A - d'un moyen de contact unique 50
B - de deux moyens de contact 51a, 51b.

Lorsqu'ils sont activés (désactivés) les moyens de contact 50, 51a, 51b connectent (déconnectent) respectivement les paires de bornes (52₁, 52₂), (53₁, 53₂), (54₁, 54₂).

Dans le cas du moyen de contact unique 50, la force appliquée peut être :
- soit faible F1 : auquel cas le moyen de contact 50 peut être utilisé pour un réveil du dispositif,
- soit plus élevée F2 : auquel cas le moyen de contact 50 peut être utilisé pour valider les signaux électriques provenant des jauges de contrainte.

Dans le cas des deux moyens de contact 51a, 51b, l'un est activé par une force faible F1 et l'autre par une force plus élevée F2. Ainsi dans une même action, un doigt, par une simple pression croissante, va activer d'abord l'un des moyens de contact (F1) puis l'autre (F2).

Il est également possible d'utiliser un micro-contacteur ayant un seul moyen de contact 50 sollicité deux fois consécutives pour disposer successivement du réveil et de la validation. Pour cela (figure 11), une borne 52₂ du micro-contacteur 19 est reliée à un circuit d'identification 55 par exemple un circuit bistable ou un microprocesseur qui peut être programmé pour discerner des commandes de direction, des commandes de "réveil" et des commandes de "validation". Le circuit d'identification 55 active une 58₁ de ses sorties lors de la première activation du moyen de contact 50 et active l'autre sortie 58₂ lors de la seconde activation du moyen de contact 50. Il peut ainsi commander le réveil ou la validation (source 8, figure 13 : bloc 25, figure 14 : bloc 27, figure 15). Pour obtenir la fonction "réveil", le micro-contacteur est connecté à la source 8 soit directement (s'il possède des doubles moyens de contacts 51a, 51b), soit à travers le circuit d'identification 55.

Quand il y a deux moyens de contact 51a, 51b, pour disposer en cascade de l'activation d'abord d'un moyen de contact 51a puis de l'autre 51b, il est possible d'utiliser un micro-contacteur dans lequel une tête unique active successivement les deux moyens de contact comme cela vient d'être décrit. Mais il est également possible d'utiliser un micro-contacteur ayant un moyen de contact unique (figure 10 - A) disposé comme cela vient d'être décrit et de combiner son action avec un autre micro-contacteur disposé coaxialement au premier sur la face opposée de la lame 10. La figure 12 représente ainsi un support 12, un micro-contacteur 19 muni d'une tête 15 qui actionne un moyen de contact unique. Ce micro-contacteur 19 est placé sous la face 7 de la lame 10 comme cela a déjà été décrit. Sur la face 6 opposée, on dispose un autre micro-contacteur 19a ayant une tête 15a qui actionne aussi un moyen de contact (non représenté). Cet autre micro-contacteur 19a est placé dans l'axe du micro-contacteur 19. Il peut être noyé dans le poussoir 16. Selon un mode préférentiel de réalisation, le micro-contacteur 19a est défini pour pouvoir être activé par une force F1 faible, et le micro-contacteur 19 est défini pour pouvoir être activé par une force F2 plus élevée F2 > F1. Ainsi lorsque le doigt appuie sur le poussoir 16 il active d'abord la tête 15a puis la tête 15. En appuyant faiblement dans l'axe ZZ, l'utilisateur peut réveiller le dispositif, puis en inclinant le doigt pour sélectionner la commande donnée, il génère des déformations de la lame et en appuyant plus fortement, il valide les signaux électriques provenant des jauges de contrainte caractérisant l'état de déformation de la lame.

On peut également intervertir les rôles des deux micro-contacteurs 19 et 19a en faisant que le micro-contacteur 19 soit activé par une force faible F1 et l'autre micro-contacteur 19a soit activé par une force F2 plus élevée F2 > F1. L'utilisateur peut par exemple appuyer sur la périphérie du poussoir 16 pour sélectionner une commande qu'il valide ensuite en appuyant au centre sur la tête 15a. Ou bien le ressort de la tête 15a peut être taré pour une force F2 élevée et l'utilisateur, après avoir sélectionné une commande, doit ensuite appuyer plus fortement pour la valider.

Il est également possible que le microprocesseur (circuit d'identification 55) différencie les différentes actions en tenant compte de la vitesse avec laquelle les pressions sont exercées.

Il est possible de combiner l'autre micro-contacteur 19a avec le pivot fixe du mode principal de réalisation.

Dans le cas où le pivot (15) est fixe, les moyens de contact 50, 51a, 51b peuvent être constitués de boutons poussoirs indépendants. Ceux-ci peuvent également exister dans le cas du pivot mobile.

Les mesures des déformations subies par la lame 10 ainsi que leur exploitation sont effectuées de la manière décrite pour le mode principal de réalisation.

La force est exercée sur la tête 15 du micro-contacteur en appuyant sur la lame 10. Un tel micro-contacteur possède des limites de rupture. Il est donc souhaitable de prévoir les cas où un utilisateur aura tendance à appuyer trop fortement sur le micro-contacteur au risque de le détruire. Un moyen pour limiter la force exercée sur le micro-contacteur est représenté sur la figure 16. Pour cela, la tête 15 du micro-contacteur 19 est réunie à une tige 43 qui traverse le corps du micro-contacteur 19. Cette tige vient soit directement soit à l'aide d'un pied 45 appuyer par exemple sur le support 12. La distance d entre le pied 45 et le support 12 est réglée pour que lorsque le pied est enfoncé au maximum, la tête 15 émerge suffisamment (distance h) pour que la tête 15 continue à constituer un pivot pour la lame 10. Ainsi, lorsque le pied 45 est en contact avec le support 12, toute force exercée en excès sera supportée par le support 12 et non pas par le micro-contacteur 19.

Les différents éléments faisant partie du dispositif de commandes qui vient d'être décrit peuvent être disposés dans un boîtier. On peut placer dans le boîtier le support 12, la lame 10 et les autres organes notamment électriques décrits précédemment. Mais préférentiellement le boîtier est conçu pour s'adapter aux particularités du dispositif.

La figure 17 représente un schéma d'un exemple de réalisation d'un tel boîtier dans le cas du mode particulier de réalisation. Il s'adapte sans difficultés au mode principal de réalisation. Le support 12 est dans ce cas constitué par le boîtier lui-même avec une partie supérieure 12a et une partie inférieure 12b. Le poussoir 16 est incorporé à la partie supérieure 12a mais pour lui conférer sa mobilité, il est relié à la partie supérieure 12a par une couronne périphérique 52 déformable. Cette aptitude peut être obtenue soit en réduisant l'épaisseur de matériau dans cette couronne périphérique soit en utilisant un matériau souple de remplissage (par exemple élastomère) soit en lui donnant une forme appropriée par exemple en accordéon. Une étanchéité au niveau du poussoir est ainsi assurée. Par son extrémité 14, la lame 10 est fixée au poussoir 16 par exemple par collage. L'autre extrémité 11 est fixée au boîtier par une lame 41a montée en porte-à-faux à l'intérieur du boîtier. En réglant les dimensions de la lame 41a, on peut ainsi obtenir une pièce élastique appropriée au déplacement de la lame 10. La lame 41a peut être en matière plastique, formant saillie, obtenue lors du moulage du boîtier. Le micro-contacteur 19 est placé sous l'extrémité 14 comme cela a déjà été décrit.

La composition du boîtier en deux parties 12a, 12b permet de faciliter la réalisation du dispositif. En effet, après moulage de la partie supérieure 12a, on place les différents organes déjà décrits, y compris les moyens électriques appropriés à l'émission des commandes, puis on ferme le boîtier avec la partie inférieure 12b. Dans le cas d'une transmission infra-rouge, une fenêtre transparente est ménagée.

Un tel boîtier peut ainsi constituer une télécommande mobile ou être utilisé en position fixe, par exemple en boîtier mural, pour commander des actuateurs.

Pour le dispositif de commandes qui vient d'être décrit, il a été précisé que la force pouvait être exercée en un endroit quelconque du poussoir ce qui permet au dispositif de disposer de commandes multidirectionnelles. Il est bien évidemment possible de ne considérer que certaines directions privilégiées et de disposer d'un dispositif de commandes mono, bi, tri... directionnelles. Par exemple, un dispositif bidirectionnel peut constituer une commande marche-arrêt.

La figure 18 représente le dispositif 5 de commandes multidirectionnelles noyé dans un enrobage approprié qui laisse au poussoir 16 ses possibilités de manoeuvre par un doigt dans les directions XX, YY et les directions intermédiaires. Le déplacement du doigt autour de la périphérie du poussoir 16 permet de disposer de commandes angulaires qui peuvent être utilisées pour générer un mouvement de rotation d'un objet réel ou d'un objet immatériel de l'appareil commandé, par exemple :
- rotation d'une tablette de microscope,
- rotation d'une grue,
- rotation d'une image sur un écran.

Cette commande angulaire est obtenue avantageusement sans mouvement de rotation du dispositif de commandes lui-même. Seul le pivotement de la lame sur la tête du micro-contacteur est sollicité. Il n'y a donc pas d'usure de pièces mues en rotation. La forme (par exemple allongée) et le fonctionnement du dispositif 5 sont ergonomiquement adaptés pour lui permettre d'être aisément manié à l'aide d'une seule main.

Il est possible de constituer un dispositif multiple en disposant, dans un même boîtier, plusieurs dispositifs élémentaires avec chacun une lame 10 et un pivot 15 afin que le dispositif multiple réponde à des sollicitations exercées par des doigts différents. Ceci présente un avantage particulier dans le cas où le dispositif est inséré dans un clavier.

## Revendications

1. Dispositif (5) de commandes multidirectionnelles comprenant au moins un élément oblong (10) ayant une première (11) et une seconde (14) extrémité, l'élément étant muni de jauges de contrainte (R1 - R8) qui détectent des déformations multidirectionnelles subies par l'élément sous l'action d'une force exercée près de la seconde extrémité, la première extrémité (11) coopérant avec un support (12), caractérisé en ce que l'élément oblong est formé d'une lame, la seconde extrémité (14) appuyant, par une face (7) de la lame, sur un pivot (15) solidaire du support (12).

2. Dispositif selon la revendication 1 caractérisé en ce que ladite force est exercée par pression sur un poussoir disposé sur la seconde extrémité (14) en vis-à-vis du pivot (15).

3. Dispositif selon les revendications 1 ou 2 caractérisé en ce que le pivot comprend un micro-contacteur (19), le poussoir servant à activer au moins un moyen de contact (50), (51a, 51b) dudit micro-contacteur, la première extrémité (11) de la lame coopérant en rotation avec le support (12) à l'aide d'un moyen d'articulation (13a, 9) (41).

4. Dispositif selon la revendication 3, caractérisé en ce que ledit moyen de contact commande une validation d'un signal de mesure délivré par les jauges de contrainte.

5. Dispositif selon la revendication 4 caractérisé en ce qu'il comprend, en outre, un autre micro-contacteur (19a) placé sur la seconde face (6) de la lame coaxialement avec ledit micro-contacteur (19), l'un des deux micro-contacteurs étant activé par une force appliquée F1 faible afin de commander un réveil dudit dispositif et l'autre des deux micro-contacteurs étant activé par une force appliquée F2 plus élevée F2 > F1, afin de commander la validation dudit signal de mesure.

6. Dispositif selon la revendication 4 caractérisé en ce que le micro-contacteur possède deux moyens de contact (51a, 51b), un premier moyen de contact activé par une force appliquée F1 faible et un second moyen de contact activé par une force appliquée F2 plus élevée F2 > F1, le premier moyen de contact commandant un réveil du dispositif et le second moyen de contact commandant la validation dudit signal de mesure.

7. Dispositif selon une des revendications 3 à 6 caractérisé en ce que le moyen d'articulation comprend un axe (9) monté sur des coussinets (13a).

8. Dispositif selon une des revendications 3 à 6 caractérisé en ce que le moyen d'articulation est formé d'une lame élastique (41, 41a).

9. Dispositif selon une des revendications 3 à 8 caractérisé en ce qu'il comprend des moyens (43, 45) pour limiter la force exercée sur le micro-contacteur.

10. Dispositif selon une des revendications 1 à 9 caractérisé en ce que la lame (10) est formée par une découpe partielle (72) d'une plaque (70), telle que la première extrémité (11) de la lame (10) reste solidaire de la plaque (70) et que la seconde extrémité (14) de la lame (10) soit mobile.

11. Dispositif selon une des revendications 2 à 10 caractérisé en ce qu'il comprend un boîtier (12a, 12b) muni de parties déformables (52) qui servent à relier le poussoir (16) à une partie du boîtier.
